# EUROPEAN PATENT SPECIFICATION

(11) **EP 4 609 079 B1**
(45) Date of publication and mention of the grant of the patent: **09.12.2026**
(21) Application number: 23883254.7
(22) Date of filing: 18.10.2023
(51) Int. Cl.: F16C 3/02, F16C 19/00, B60K 17/22, B21J 5/00, F16D 1/076, B60K 17/24

(54) **CONNECTION FLANGE WITH REDUCED CHIP SURFACE IN CARDAN SHAFT MIDSHIP ASSEMBLY**
VERBINDUNGSFLANSCH MIT REDUZIERTER SPANFLÄCHE IN KARDANWELLEN-MITTELSCHIFFSANORDNUNG
BRIDE DE CONNEXION À SURFACE DE PUCE RÉDUITE DANS UN ENSEMBLE INTERMÉDIAIRE D'ARBRE À CARDAN

(30) Priority: 25.10.2022 TR 202216174
(43) Date of publication of application: 03.09.2025
(73) Proprietor: Tirsan Kardan Sanayi Ve Ticaret Anonim Sirketi, 45000 Yunusemre - Manisa (TR)
(72) Inventor: ÖZGÜRLER, Hüseyin, Yunusemre/Manisa (TR)
(74) Representative: Yamankaradeniz, Kemal
(86) International application number: PCT/TR2023/051155
(87) International publication number: WO 2024/091202

(56) References cited:
- CN-A- 111 853 042
- CN-U- 202 851 591
- CN-U- 205 997 709
- CN-U- 206 797 123
- DE-U- 1 790 711
- KR-A- 20100 093 699
- US-A1- 2016 281 767
- US-A1- 2016 281 767
- HARSH KUMAR: "Design for Manufacturing of Joint Flange of Commercial Vehicle", RESEARCHGATE, 1 September 2021 (2021-09-01), XP093166760, Retrieved from the Internet <URL:https://www.researchgate.net/publication/354389377_Design_for_Manufacturing_of_Joint_Flange_of_Commercial_Vehicle/link/6136665c2b40ec7d8bed40b7/download?_tp=eyJjb250ZXh0Ijp7ImZpcnN0UGFnZSI6InB1YmxpY2F0aW9uIiwicGFnZSI6InB1YmxpY2F0aW9uIn19>
- ASHISH DEWANGAN: "Modification of Manufacturing Process for Companion Flange used in Commercial Vehicles and its Analysis", vol. 7, no. 7, 1 July 2020 (2020-07-01), XP093166764, ISSN: 2349-5162, Retrieved from the Internet <URL:https://www.jetir.org/papers/JETIR2007112.pdf>
- HARSH KUMAR: "Design for Manufacturing of Joint Flange of Commercial Vehicle", RESEARCHGATE, 1 September 2021 (2021-09-01), XP093166760, Retrieved from the Internet <URL:https://www.researchgate.net/publication/354389377_Design_for_Manufacturing_of_Joint_Flange_of_Commercial_Vehicle/link/6136665c2b40ec7d8bed40b7/download?_tp=eyJjb250ZXh0Ijp7ImZpcnN0UGFnZSI6InB1YmxpY2F0aW9uIiwicGFnZSI6InB1YmxpY2F0aW9uIn19>
- ASHISH DEWANGAN: "Modification of Manufacturing Process for Companion Flange used in Commercial Vehicles and its Analysis", JOURNAL OF EMERGING TECHNOLOGIES AND INNOVATIVE RESEARCH, vol. 7, no. 7, 1 July 2020 (2020-07-01), XP093166764, ISSN: 2349-5162

## Description

### TECHNICAL FIELD

The invention relates to a connection flange in a cardan shaft midship assembly group.

### STATE OF THE ART

The cardan shaft midship assembly group comprises a complete center bearing, midship shaft, connection flange, dust shield, connector and a connection element selected according to the connector, which enables the cardan shaft to be mounted on the vehicle and acts as a support. In the present technique, the circular slot in the hub of the connection flange, which is one of the parts forming the center bearing assembly, is obtained by deep machining. In this case, the raw part is heavier, and more chips are removed from the part.

There are some applications in the global patent literature regarding the contact surface of the cardan shaft connection flange.

The application CN202149153U in the Chinese patent literature relates to a transmission shaft end surface threaded flange yoke. The connecting lug holes of the transmission shaft are symmetrically positioned in the flange yoke. The end face teeth are symmetrically positioned at the four corners at the lower end of the flange. Excess metal in the threaded areas, which are connected two by two in the end face threads, has been hollowed out to form arc - shaped cavities. Platforms lower than the outer surface of the flange yoke are positioned on the outer side end faces of the transmission shaft connecting lug holes, and the diameter of each platform is larger than the transmission shaft lug hole. The transmission shaft end face threaded flange yoke has a simple structure. With this surface form, the transmission shaft end surface threaded flange yoke reduces the weight of the parts, saves material, increases the useful area for positioning a transmission shaft in the whole vehicle, reduces the stress on the flange, improves the balance property and extends the life of the transmission shaft, and can be used in various cardan

Other examples are disclosed by : US2016281767, DE1790711U, CN202851591U, CN206797123U, CN205997709U, KR20100093699A, XP093166760 and XP093166764.

As a result, the existence of the above problems and the lack of an existing solution made it necessary to make a development in the relevant technical field.

### AIM OF INVENTION

The invention aims to solve the above - mentioned problems, to eliminate all disadvantages and to bring additional advantages to the structure.

The aim of the invention is to obtain a superficial connector form by machining only the surface on which the connector will sit instead of the connection seat, which is currently located in the hub of the connection flange and obtained by deep machining the connection flange circularly. Thus, the raw part was lightened and less chips were removed from the part.

The invention is to fulfil the aforementioned purposes;
the invention relates to the midship assembly group according to claim 1.

The structural and characteristic features, working principle and advantages of the invention will be more clearly understood by means of the figures given below and the detailed description written with references to these figures. Therefore, the evaluation should be made by taking these figures and detailed description into consideration.

### BRIEF DESCRIPTION OF THE FIGURES

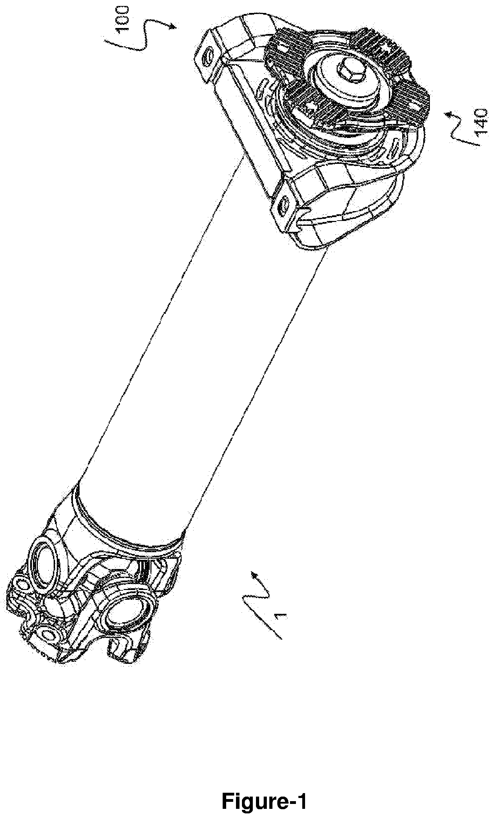

- Figure 1.: shows the connection flange integrated to the cardan shaft in the complete cardan shaft midship assembly group.

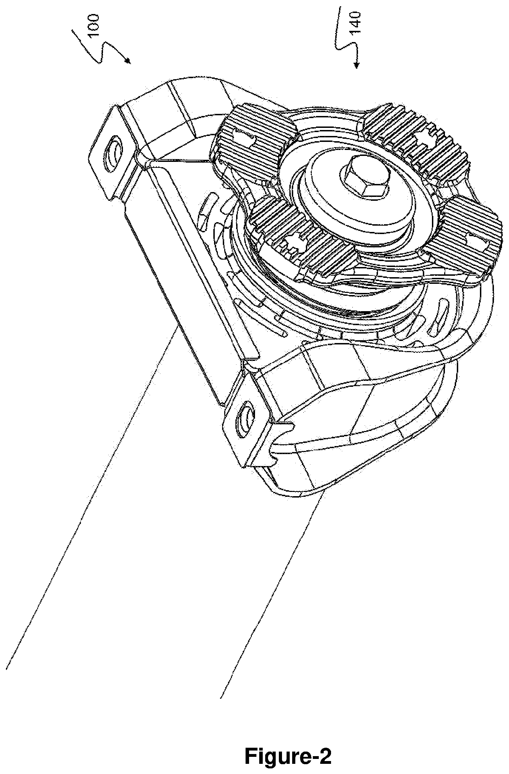

- Figure 2.: shows the connection flange integrated to the cardan shaft in detail.

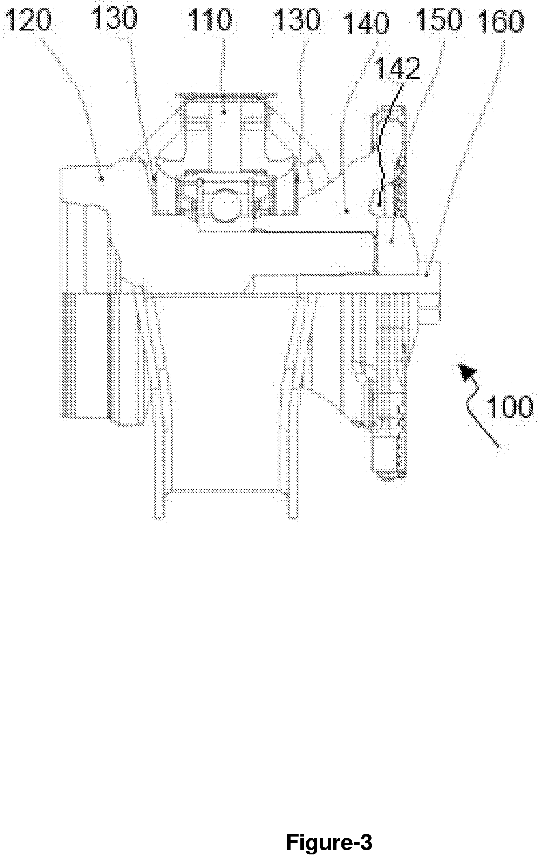

- Figure 3.: shows the components of the cardan shaft midship assembly group in section.

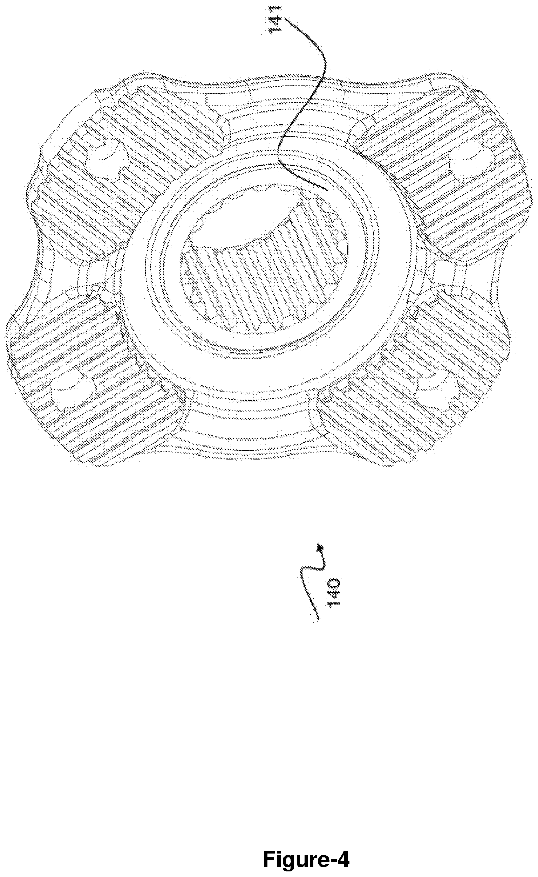

- Figure 4.: shows the connection surface form of the connection flange in perspective.

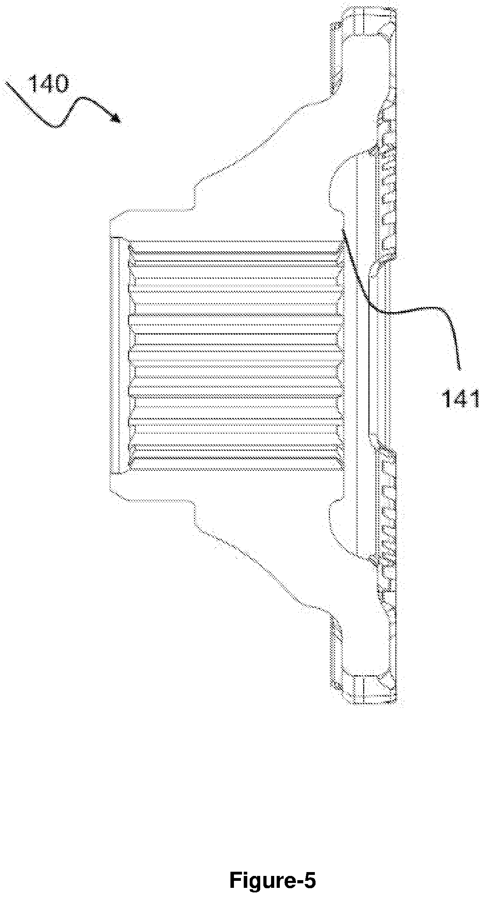

- Figure 5.: shows the connection surface form of the connection flange as a side section.

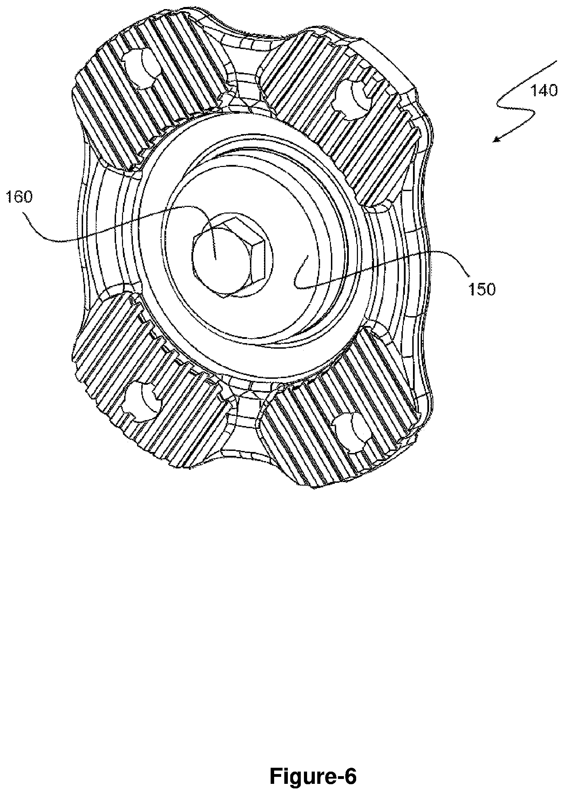

- Figure 6.: shows the mounting of the fastener to the connection flange.

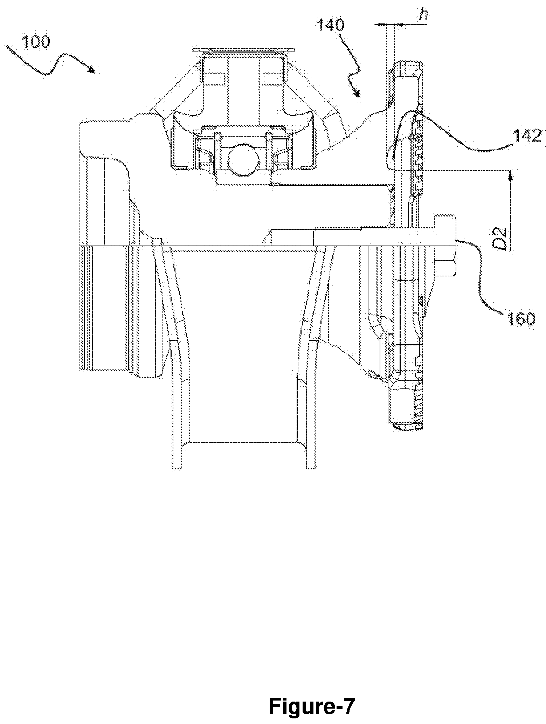

- Figure 7.: shows the collapse form of the connection flange together with the fixing element in section.

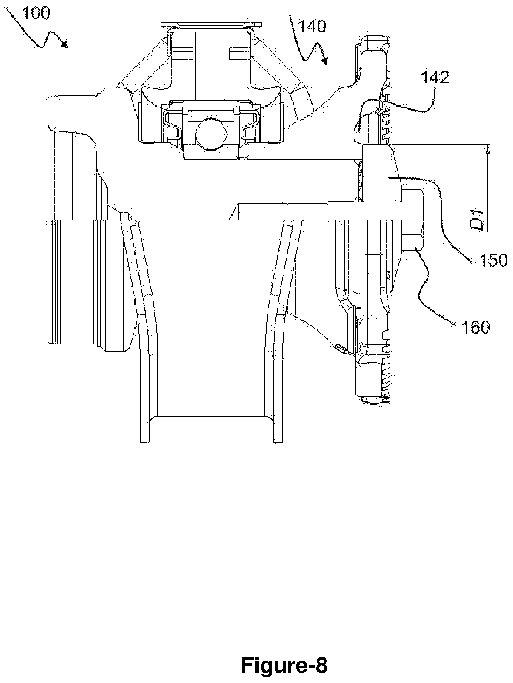

- Figure 8.: shows the collapse form of the connection flange together with the fixing element and connection in section.

### REFERENCE NUMBERS

- 1.: Cardan shaft
- 100.: Midship assembly group
110. Center bearing
120. Midship shaft
130. Protector
140. Connection flange
141. Connection seating surface
142. Collapse form
D2: Collapse form diameter
D1: Connector diameter
h: Collapse depth
150. Connector
160. Fixing element

### DETAILED DESCRIPTION OF THE INVENTION

The cardan shaft (1) is the intermediate element that transfers the torque from the engine to the differential and is mounted on the vehicle with an midship assembly group (100). The midship assembly group (100) serves as a support for the cardan shaft (1).

The midship assembly group (100) comprises a center bearing (110), the midship shaft (120), a protector (130), a connection flange (140), a connector (150) and a fixing element (160).

The center bearing (110) is the structure that allows the cardan shaft (1) to be mounted to the vehicle as a whole.

The midship shaft (120) is the structure that is mounted to the bearing on the center bearing (110).

The protector (130) is the structure that protects the bearing inside the center bearing (110) from external influences such as dust etc. The protector (130) is preferably a steel structure formed from sheet material.

The fixing element (160) is the structure that enables the center bearing (110) and connection flange (140) to be fixed on the midship shaft (120) with the help of the connector (150).

The connection flange (140) is a structure which is mounted on the midship shaft (120) with the help of the threads on it after the center bearing (110) is mounted on the midship shaft (120), and enables the center bearing (110) to be fixed with the help of the connector (150) and the fixing element (160). On the connection flange (140), there is a specially shaped connection seating surface (141) for seating the connector (150). The feature of the connection seating surface (141) is that it has a form obtained as a result of surface machining.

The collapse form (142) is the form created during moulding by forging. It is not machined. With this form, the area outside the connector seating surface (141) is not machined.

The collapse form (142) is formed during forging of the part at a collapse depth (h) such that the diameter of the collapse form (D2) is the same or greater than the diameter of the connector (D1) and is not subjected to any machining.

The connection seating surface (141) is obtained by surface machining of the connection flange (140) so as not to change the diameter of the collapse form (D2).

During the assembly of the midship assembly group (100), the connector diameter (D1) is placed on the midship shaft (120) by contacting the connection seating surface (141) with a collapse form diameter (D2) equal to or greater than itself and fixed with the fixing element (160).

## Claims

1. A midship assembly group (100) comprising :
a center bearing (110) which enables the cardan shaft (1)transferring the torque received from the engine to the differential, to be mounted on the vehicle and which acts as a support for said cardan shaft (1), which enables said cardan shaft (1) to be mounted on the vehicle as a whole, a connection flange (140) which enables said center bearing (110) to be fixed, a connector (150) which enables said connection flange (140) to be fixed, and further comprising :
• a specially shaped connection seating surface (141) for seating the connector (150) on said connection flange (140), and
• a collapse form (142) in the area outside the said connection seating surface (141),
and **characterised in that**,
said connection seating surface (141) is obtained by machining only the surface on which said connector (150) is to be seated without deep machining, and said collapse form (142) is formed during moulding by forging, without machining.

## Patentansprüche

1. Mittschiffsanordnungsgruppe (100), umfassend:
ein Mittellager (110), das es ermöglicht, dass die Kardanwelle (1), die das von dem Motor empfangene Drehmoment auf das Differential überträgt, an dem Fahrzeug montiert wird und das als Träger für die Kardanwelle (1) dient, das es ermöglicht, dass die Kardanwelle (1) an dem Fahrzeug als Ganzes montiert wird, einen Verbindungsflansch (140), der es ermöglicht, dass das Mittellager (110) fixiert wird, einen Verbinder (150), der es ermöglicht, dass der Verbindungsflansch (140) fixiert wird, und ferner **umfassend**:
• eine speziell geformte Verbindungssitzfläche (141) zum Aufsetzen des Verbinders (150) auf den Verbindungsflansch (140), und
• eine Kollapsform (142) in dem Bereich außerhalb der Verbindungssitzfläche (14), und
**dadurch gekennzeichnet, dass**
die Verbindungssitzfläche (141) erhalten wird, indem nur die Fläche bearbeitet wird, auf der der Verbinder (150) ohne Tiefbearbeitung sitzen soll, und die Kollapsform (142) während des Formens durch Schmieden ohne Bearbeitung gebildet wird.

## Revendications

1. Groupe d'assemblage intermédiaire (100) comprenant :
un palier central (110) qui permet à l'arbre à cardan (1), transmettant le couple reçu du moteur au différentiel, d'être monté sur le véhicule et qui sert de support audit arbre à cardan (1), ce qui permet audit arbre à cardan (1) d'être monté sur le véhicule dans son ensemble, une bride de raccordement (140) qui permet audit palier central (110) d'être fixé, un raccord (150) qui permet à ladite bride de raccordement (140) d'être fixée, et comprenant en outre :
• une surface d'appui de raccordement (141) de forme spéciale destinée à recevoir le raccord (150) sur ladite bride de raccordement (140), et
• une forme en creux (142) dans la zone située à l'extérieur de ladite surface d'appui de raccordement (14), et
**caractérisé en ce que** ladite surface d'appui de raccordement (141) est obtenue par usinage uniquement de la surface sur laquelle ledit raccord (150) doit prendre appui sans usinage en profondeur, et ladite forme en creux (142) est formée lors d'un moulage par forgeage, sans usinage.
